# EUROPÄISCHE PATENTSCHRIFT

(11) **EP 1 598 586 B1**
(45) Veröffentlichungstag und Bekanntmachung des Hinweises auf die Patenterteilung: **02.09.2009**
(21) Anmeldenummer: 05090086.9
(22) Anmeldetag: 04.04.2005
(51) Int. Cl.: F16L 25/00, F16L 9/08, F16L 21/03

(54) **Verfahren und Anordnung zur Leckagevorwarnung und Bauteilpositionierungsanzeige bei Muffenverbindungen**
Method and system for preventing leakage and indicating relative positions of elements in an inserted joint
Méthode et système de prévention de fuite et d'indication du positionnement relatif d'éléments d'un raccord emboîté

(30) Priorität: 17.05.2004 DE 102004025135
(43) Veröffentlichungstag der Anmeldung: 23.11.2005
(73) Patentinhaber: PT-POLY-TEC GmbH Vertrieb und Herstellung von Dichtungssystemen, 65629 Niederneisen (DE)
(72) Erfinder: Prof. Dr.-Ing. Wegener, Eberhard, 15517 Fürstenwalde (DE)
(74) Vertreter: Blumbach - Zinngrebe

(56) Entgegenhaltungen:
- EP-A- 0 677 690
- DE-A1- 10 154 747
- DE-A1- 19 601 652
- US-A- 5 529 346
- US-A1- 2003 042 688

## Beschreibung

Die Erfindung betrifft ein Verfahren und eine Vorrichtung zur Leckagevorwarnung bei Muffenverbindungen zur Vermeidung von Leckagen, insbesondere bei erdverlegten, aus Betonelementen zusammengesteckten Rohrleitungen und Kanälen mit einer in dem zwischen den ineinander gefügten Enden der Betonelemente gebildeten Ringspalt angeordneten gummielastischen Profildichtung.

Abwasserkanäle und -leitungen bestehen bekanntermaßen aus über Muffenverbindungen aneinander gefügten Beton- oder Stahlbetonelementen. Der beim selbstzentrierenden Zusammenfügen der Betonelemente an der Verbindungsstelle entstehende, im Wesentlichen konzentrische Ringspalt wird jeweils durch eine gummielastische Profildichtung abgedichtet. Nach Fertigstellung des Kanals erfolgt eine Überprüfung der Dichtheit der Muffenverbindungen, indem ein dicht verschlossener Kanalabschnitt einem bestimmten Wasserdruck oder einem Luftüberdruck- bzw. Luftunterdruck ausgesetzt wird. Durch fehlerhafte Bettung der Kanalelemente, aus verschiedenen Gründen auftretende nachträgliche Setzungen des den Kanal umgebenden Erdreiches oder durch sich ändernde Verkehrslasten kann sich über einen längeren Zeitraum das Dichtverhalten in der Muffenverbindung allmählich ändern und schließlich zu Leckagen mit den daraus folgenden negativen Auswirkungen auf die Umwelt führen. Auch bei der Montage ist eine nicht zentrierte Anordnung im Bereich der Muffenverbindung denkbar, die zu Undichtheiten führen kann.

Es wurde bereits vorgeschlagen, auf der Grundlage einer Permeationsmessung die Verminderung der elastischen Eigenschaften des Dichtungsmaterials infolge Materialversprödung und -ermüdung zu messen und daraus rechnerisch den Zeitpunkt zu ermitteln, zu dem die Durchlässigkeit des Dichtungsmaterials so groß sein wird, dass Leckagen auftreten werden. Dieses allein auf die Alterung des Dichtungsmaterials gerichtete Verfahren erfordert zum einen einen erheblichen Messaufwand und kann das Auftreten von Leckagen nur nach einem langen Zeitablauf vorhersagen.

Aus der DE 101 54 747 A1 ist eine Einrichtung zum Prüfen auf Dichtigkeit bei einer Dichtanordnung von Rohren oder Schachtbauwerken bekannt. Diese offenbart eine Muffenverbindung mit einem radialen Ringspalt, in dem ein Dichtring angeordnet ist. Der Dichtring enthält einen ringförmigen Prüfraum, der über eine Bohrung mit einem Prüfmedium gefüllt wird. Ein Messgerät erfasst den Druck im Prüfraum, so dass eine Undichtigkeit aufgrund eines Druckabfalls festgestellt werden kann.

Die US 2003/0042688 A1 dagegen offenbart eine Dichtung, die rein axial zwischen zwei Flanschflächen eingespannt ist. Die Flanschflächen werden durch axiale Schrauben zusammengedrückt. Mit Hilfe von Kondensatoren, die in der axialen Dichtung angeordnet sind, wird der axiale Druck auf die Dichtung gemessen. Auf diese Weise kann bei der Montage festgestellt werden, ob der von den Schrauben auf den Flansch ausgeübte axiale Druck ausreichend ist, um die erforderliche Abdichtung zu gewährleisten.

Der Erfindung liegt die Aufgabe zugrunde, ein Verfahren zur Leckagevorwarnung bei Muffenverbindungen von Kanälen und Leitungen anzugeben, das mit geringem Aufwand zu jeder Zeit ein bevorstehendes Auftreten von Leckagen erkennen lässt und die Einleitung geeigneter Gegenmaßnahmen erlaubt.

Erfindungsgemäß wird die Aufgabe mit einem Verfahren gemäß den Merkmalen des Patentanspruchs 1 und einer nach Anspruch 6 ausgebildeten Muffenverbindung zur Durchführung des Verfahrens gelöst.

Die Erfindung geht von aus Betonfertigteilen gebildeten, über Muffenverbindungen zusammengesetzten Kanälen aus, bei denen der in der Muffenverbindung ausgebildete Ringspalt durch eine elastische Profildichtung abgedichtet ist. Der Grundgedanke der Erfindung besteht darin, dass bei der Verlegung der Kanalelemente und während des Betriebs der Kanäle und Leitungen verteilt über den Umfang der Profildichtung die auf die Profildichtung wirkenden radialen Verformungskräfte oder Anpresskräfte laufend gemessen werden. Aus diesen verteilt über den Umfang der Profildichtung gemessenen radialen Verformungskräften bzw. dem Unterschied zwischen den Verformungs- oder Anpresskräften kann die Lage der aneinandergrenzenden Rohrenden bzw. die aktuelle Ringspaltgeometrie ermittelt werden. Wenn die Anpresskräfte auf die betreffende Profildichtung überall gleich sind, ist der Ringspalt konzentrisch ausgebildet, und die Dichtung liegt überall gleichmäßig an den Ringspaltwänden an. Es treten keine Abdichtungsprobleme in der Muffenverbindung auf und sind in naher Zukunft auch nicht zu erwarten. Bei unterschiedlichen Anpress- oder Verformungskräften an den Profildichtungen ist die Spaltweite in einem Bereich mit verringerten radialen Verformungskräften vergrößert. In diesem Bereich können in der Muffenverbindung bereits aktuell oder in Zukunft Leckagen auftreten. Da die Position der gemessenen Verformungs- oder Anpresskräfte und damit die lokale Abweichung von der Konzentrizität des Ringspaltes bekannt ist, kann aufgrund der am Umfang der jeweiligen Dichtung gemessenen unterschiedlichen Anpresskräfte die genaue Lage des aktuellen oder künftig zu erwartenden Lecks ermittelt werden, um bereits beim Verlegen des Kanals oder während dessen Betriebes schon vor dem Auftreten der Leckage geeignete Maßnahmen zur Wiederherstellung der Ringspaltkonzentrizität oder zur unmittelbaren Einflussnahme auf das Dichtungselement bzw. zur zusätzlichen Abdichtung treffen zu können und dadurch Leckagen schon vor deren Auftreten wirksam zu begegnen. Da die Messung kontinuierlich durchgeführt wird, kann aus der zeitlichen Änderung der Spaltweite in einem bestimmten Bereich das Auftreten einer Leckage mit hoher Wahrscheinlichkeit im Voraus bestimmt werden.

In Ausgestaltung der Erfindung erfolgt die Messung der Anpress-/Verformungskräfte an der Profildichtung mittels einer Druckmessung, und zwar an mindestens vier in gleichem Abstand am Umfang der Dichtung verteilten Messstellen.

In weiterer Ausgestaltung der Erfindung wird einer nicht konzentrischen Ringspaltausbildung und damit möglicherweise verbundenen Leckagen durch Maßnahmen in Verbindung mit der Bettung, Erdverfüllung, Verdichtung oder Kanalbelastung begegnet. Andererseits kann eine aufgrund unterschiedlicher Anpresskräfte vorhergesagte Leckage auch durch die zusätzliche Anordnung von Dichtelementen oder durch eine Aktivierung elektrisch aktivierbarer Dichtelemente verhindert werden.

Gemäß einem weiteren wichtigen Merkmal der Erfindung sind zur Messung der Anpress-/Verformungskräfte im Funktionsbereich der im Ringspalt der Muffenverbindung vorgesehenen Profildichtung in gleichmäßigem Abstand zueinander Drucksensoren angeordnet. Die Drucksensoren sind telemetrisch mit einer Auswerteeinheit zur Ermittlung der jeweiligen Spaltgeometrie aufgrund der gemessenen Anpresskräfte für jede Muffenverbindung verbunden, sowie zur Erfassung der im laufe der Zeit auftretenden Änderungen der Spaltgeometrie und zum Signalisieren einer Leckage oder einer künftig zu erwartenden Leckage bei einer bestimmten Spaltweite vorgesehen.

In weiterer Ausbildung der Erfindung sind die Sensoren an elektrisch aktivierbare Dichtungselemente gekoppelt, um diese bei einer bestimmten Spaltweite zu aktivieren und den erforderlichen Abdichtzustand herzustellen.

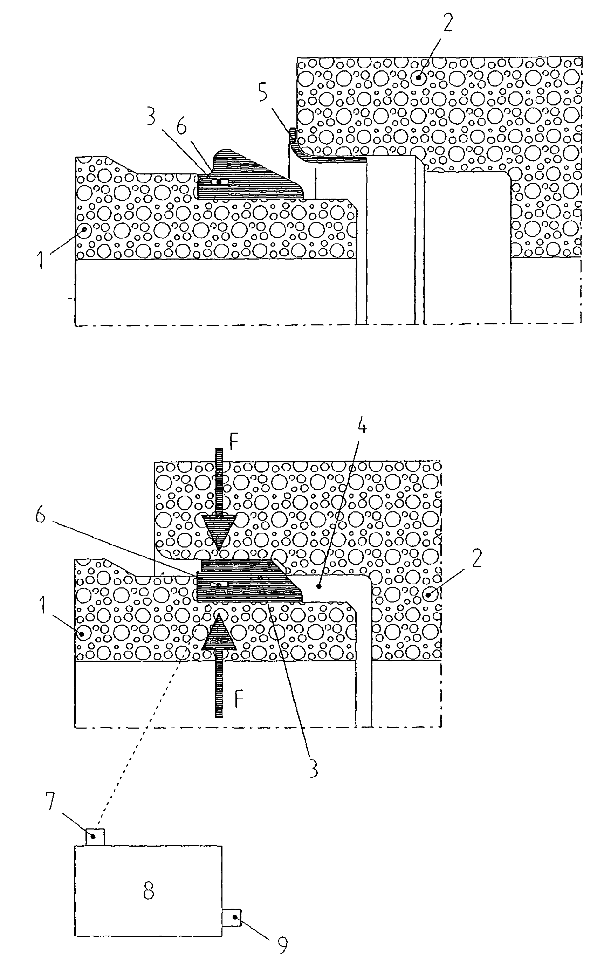

Die beigefügte Zeichnung zeigt eine beispielhafte Ausführungsform der Erfindung. Die als Teilansicht vor und nach der Montage dargestellte Rohrmuffenverbindung zeigt für einen Abwasserkanal ein Spitzende 1 eines ersten Betonelements mit am Außenumfang angebrachter Profildichtung 3 und ein Muffenende 2 eines zweiten Betonelements mit am Innenumfang angebrachtem Gleitelement 5. in der zusammengefügten Lage bilden das Muffenende 2 und das Spitzende 1 einen Ringspalt 4, in dem die Profildichtung 3 elastisch zusammengepresst wird und den Ringspalt 4 abdichtet. In die Profildichtung 3 sind in deren Umfangsrichtung in gleichem Abstand zueinander vier Drucksensoren 6 so integriert, dass die Dichtwirkung der Profildichtung nicht beeinträchtigt wird. Die Drucksensoren 6 messen die auf die Profildichtung 3 wirkenden Anpress-/Verformungskräfte F. Wenn die Betonelemente nicht axial fluchtend, sondern winklig versetzt zueinander montiert sind oder sich einer derartiger Versatz im Laufe der Zeit durch Verkehrslasten und dgl. ausbildet, können aufgrund der dadurch bedingten ungleichmäßigen Dichtwirkung der Profildichtung 3 sofort bzw. nach einer längeren Betriebsdauer Leckagen auftreten. Die Drucksensoren 6 messen die im Ringspalt 4 auf die Profildichtüng 3 wirkenden Kräfte. Die Drucksensoren 6 sind mit einem Sender (nicht dargestellt) ausgestattet, der die Messergebnisse über einen Empfänger 7 einer Auswerteeinheit 8 übermittelt. Ein in der Auswerteeinheit 8 ermittelter Unterschied zwischen den am Umfang der Profildichtung 3 wirkenden Anpresskräften, die Größe dieses Unterschieds und die Vergrößerung dieses Unterschieds im Laufe der Betriebszeit des Abwasserkanals lassen Rückschlüsse auf vorhandene oder künftig mögliche Leckagen und den Ort der Leckage am Umfang der Muffenverbindung und über die Länge des Abwasserkanals zu. Die Auswerteeinheit 8 ist mit einem Signalgeber 9 verbunden, der bei einer bestimmten Größe der in der jeweiligen Profildichtung gemessenen Anpressdruckdifferenz bzw. einer Vergrößerung dieses Wertes nach einem bestimmten Zeitablauf eine tatsächlich vorhandene oder künftig mögliche Leckage signalisiert.

### Bezugszeichenliste

- 1: Spitzende von Betonkanalelement
- 2: Muffenende von Kanalbetonelement
- 3: Profildichtung
- 4: Ringspalt
- 5: Gleitelement
- 6: Drucksensor
- 7: Empfänger
- 8: Auswerteeinheit
- 9: Signalgeber

## Patentansprüche

1. Verfahren zur Leckagevorwarnung bei Muffenverbindungen zur Vermeidung von Leckagen bei erdverlegten, aus Betonelementen zusammengesteckten Rohrleitungen und Kanälen mit einer in dem zwischen den ineinander gefügten Enden der Betonelemente gebildeten Ringspalt angeordneten gummielastischen Profildichtung,
**dadurch gekennzeichnet,**
a) **dass** zur Positionierungsanzeige bei der Montage und im Betrieb verteilt über den Umfang der Profildichtung (3) die auf die Profildichtung wirkenden radialen Verformungskräfte (F) laufend gemessen werden,
b) **dass** aus einem Unterschied der am Umfang gemessenen radialen Verformungskräfte eine Abweichung von der Konzentrizität des Ringspaltes (4) ermittelt wird,
c) **dass** aus der Größe der Abweichung oder der zeitlichen Änderung der Abweichung eine vorhandene oder in einem bestimmten Zeitraum zu erwartende Leckage im Bereich der betreffenden Muffenverbindung rechnerisch oder empirisch ermittelt wird und
d) **dass** in Abhängigkeit von der festgestellten Verformungskraftdifferenz und Ringspaltgeometrie Maßnahmen zur Herstellung der Ringspaltkonzentrizität oder zur Beibehaltung der ermittelten Ringspaltgeometrie und/oder zur zusätzlichen Abdichtung im Ringspalt getroffen werden.

2. Verfahren nach Anspruch 1, **dadurch gekennzeichnet, dass** an mindestens vier in gleichem Abstand am Umfang der Profildichtung (3) verteilten Messstellen eine Druckmessung zur Feststellung der radialen Verformungskräfte durchgeführt wird und die Messwerte telemetrisch zu einer Auswerteeinheit übertragen werden.

3. Verfahren nach Anspruch 1, **dadurch gekennzeichnet, dass** die Ringspaltkonzentrizität durch Maßnahmen zur Erdreichverdichtung sowie zur Bettung und Belastung der Betonelemente eingestellt wird.

4. Verfahren nach Anspruch 1, **dadurch gekennzeichnet, dass** die Dichtwirkung bei der Feststellung eines nicht konzentrischen Dichtspaltes im Ergebnis der Messung der radialen Verformungskräfte durch Aktivieren elektrisch aktivierbarer Dichtelemente oder Quelldichtungen wieder hergestellt wird.

5. Verfahren nach Anspruch 1, **dadurch gekennzeichnet, dass** die Dichtwirkung bei Feststellung eines nicht konzentrischen Dichtspaltes durch nachträgliches Einbringen mindestens einer weiteren Dichtung erzeugt wird.

6. Muffenverbindung zur Durchführung des Verfahrens nach Anspruch 1,
**dadurch gekennzeichnet,**
a) **dass** in den Funktionsbereich der im Ringspalt (4) der Muffenverbindung vorhandenen oder zur Verbesserung der Dichtwirkung zusätzlich eingebrachten elastischen Profildichtung in gleichmäßigem Abstand zueinander mindestens vier Sensoren (6) zur Messung der auf die Dichtung wirkenden Verformungs-/Anpresskräfte oder des Rückfederungsverhaltens der Dichtung angeordnet sind,
b) **dass** die Sensoren (6) telemetrisch mit einer Auswerteeinheit (8) zur Ermittlung der Ringspaltgeometrie zum Messzeitpunkt aus einer Differenz der am Umfang der Profildichtung gemessenen radialen Verformungskräfte verbunden sind und
c) **dass** die Auswerteeinheit (8) einen Signalgeber (9) zum Signalisieren einer gegenwärtigen oder künftigen Leckage entsprechend der Größe der Differenz und deren Vergrößerung aufweist.

7. Muffenverbindung nach Anspruch 6, **dadurch gekennzeichnet, dass** die Sensoren (6) zur Herstellung des erforderlichen Abdichtzustandes an elektrisch aktivierbare Dichtungselemente oder Quelldichtungen gekoppelt sind.

8. Muffenverbindung nach Anspruch 6, **dadurch gekennzeichnet, dass** die Lage der Sensoren (6) in der Dichtung zur Gewährleistung einer bestimmten Montageposition markiert ist.

## Claims

1. Method for providing advance warning of leakage in sleeve joints in order to prevent leakages in pipelines and ducts which are laid in the ground, are pieced together from concrete elements and have a rubber-elastic profiled seal disposed in the annular gap formed between the ends of the concrete elements which are inserted one inside the other,
**characterised in that**
a) for position indication, the deformation forces (F) which act radially on the profiled seal are continually measured during assembly and in operation in a distributed manner over the periphery of the profiled seal (3),
b) from a difference between the radial deformation forces measured on the periphery a deviation from concentricity of the annular gap (4) is determined,
c) from the size of the deviation or the change in the deviation over time, leakage which exists or is to be expected within a specific time frame in the region of the sleeve connection concerned is determined by calculation or empirically and
d) in dependence upon the determined deformation force difference and annular gap geometry, measures are taken to create annular gap concentricity or to retain the determined annular gap geometry and/or to provide additional sealing in the annular gap.

2. Method as claimed in claim 1, **characterised in that** a pressure measurement is carried out at at least four measuring points distributed uniformly on the periphery of the profiled seal (3) to determine the radial deformation forces, and the measurement values are transmitted telemetrically to an evaluation unit.

3. Method as claimed in claim 1, **characterised in that** the annular gap concentricity is adjusted by measures for ground compaction and for bedding and loading of the concrete elements.

4. Method as claimed in claim 1, **characterised in that** when it is determined that the sealing gap is not concentric as a result of measuring the radial deformation forces the sealing effect is created by activation of electrically activatable sealing elements or swelling seals.

5. Method as claimed in claim 1, **characterised in that** when it is determined that the sealing gap is not concentric the sealing effect is produced by subsequent introduction of at least one further seal.

6. Sleeve connection for carrying out the method as claimed in claim 1,
**characterised in that**
a) at least four sensors (6) for measurement of the deformation/pressing forces acting upon the seal or of the spring-back behaviour of the seal are disposed, uniformly spaced from each other, in the operational region of the elastic profiled seal which is provided in the annular gap (4) of the sleeve connection or is additionally inserted to improve the sealing effect,
b) the sensors (6) are telemetrically connected to an evaluation unit (8) for determining the annular gap geometry at the moment of measurement from a difference between the radial deformation forces measured on the periphery of the profiled seal and
c) the evaluation unit (8) has a signal transmitter (9) for signalling current or future leakage corresponding to the size of the difference and an increase therein.

7. Sleeve connection as claimed in claim 6, **characterised in that** in order to create the necessary sealing condition the sensors (6) are coupled to electrically activatable sealing elements or swelling seals.

8. Sleeve connection as claimed in claim 6, **characterised in that** the position of the sensors (6) in the seal is marked to ensure a specific assembly position.

## Revendications

1. Procédé pour le préavertissement de fuite sur des liaisons de manchons afin d'éviter des fuites dans le cas de conduites et canalisations enterrées et emboîtées à base d'éléments en béton avec un joint profilé élastique comme le caoutchouc et disposé dans la fente annulaire formée entre les extrémités, emboîtées les unes dans les autres, des éléments en béton,
**caractérisé en ce que**
a) pour l'affichage du positionnement, les forces de déformation (F) radiales agissant sur le joint profilé sont mesurées en permanence lors du montage et en service avec une répartition sur le pourtour du joint profilé (3),
b) un écart par rapport à la concentricité de la fente annulaire (4) est déterminé à partir d'une différence des forces de déformation radiales et mesurées sur le pourtour,
c) à partir de la grandeur de l'écart ou de la variation dans le temps de cet écart, une fuite présente ou à escompter dans une période définie dans la zone de liaison de manchons concernée est déterminée par le calcul ou de façon empirique et
d) en fonction de la différence de force de déformation constatée et de la géométrie de la fente annulaire, des mesures sont prises pour préparer la concentricité de la fente annulaire ou pour conserver la géométrie de fente annulaire déterminée et/ou pour l'étanchéité supplémentaire dans la fente annulaire.

2. Procédé selon la revendication 1, **caractérisé en ce qu'**une mesure de pression est effectuée sur au moins quatre points de mesure répartis à égale distance sur le pourtour du joint profilé (3) pour déterminer les forces de déformation radiale et les valeurs mesurées sont transmises par télémétrie à une unité d'analyse.

3. Procédé selon la revendication 1, **caractérisé en ce que** la concentricité de la fente annulaire est ajustée par des mesures destinées au compactage de la terre ainsi qu'à l'assise et à la charge des éléments en béton.

4. Procédé selon la revendication 1, **caractérisé en ce que** l'effet d'étanchéité est établi lors de la constatation d'une fente d'étanchéité non concentrique comme résultat de la mesure des forces de déformation radiales par activation d'éléments d'étanchéité ou de joints de gonflement activables électriquement.

5. Procédé selon la revendication 1, **caractérisé en ce que** l'effet d'étanchéité est généré en cas de constatation d'une fente d'étanchéité non concentrique par l'introduction ultérieure d'au moins un autre joint.

6. Liaison de manchons pour la mise en oeuvre du procédé selon la revendication 1,
**caractérisée en ce que,**
a) au moins quatre capteurs (6) sont disposés dans la zone fonctionnelle du joint profilé élastique, présent dans la fente annulaire (4) de la liaison de manchons ou introduit en supplément pour l'amélioration de l'effet d'étanchéité à distance uniforme les uns des autres pour mesurer les forces de déformation/pression agissant sur le joint ou le comportement de retour élastique du joint,
b) **en ce que** les capteurs (6) sont reliés par télémétrie à une unité d'analyse (8) pour déterminer la géométrie de la fente annulaire au moment de la mesure à partir d'une différence des forces de déformation radiales mesurées sur le pourtour du joint profilé et
c) **en ce que** l'unité d'analyse (8) présente un générateur de signaux (9) pour la signalisation d'une fuite présente ou future en fonction de la grandeur de la différence et de son augmentation.

7. Liaison de manchons selon la revendication 6, **caractérisée en ce que** les capteurs (6) sont couplés pour établir l'état d'étanchéité nécessaire sur des éléments d'étanchéité ou joints de gonflement activables électriquement.

8. Liaison de manchons selon la revendication 6, **caractérisée en ce que** la position des capteurs (6) est repérée dans le joint pour garantir une position de montage définie.
